Europäisches Patentamt

**European Patent Office**

Office européen des brevets

(19)

(11) Numéro de publication : **0 029 779**

**B1**

## FASCICULE DE BREVET EUROPÉEN

(12)

(45) Date de publication du fascicule du brevet :
03.04.85

(51) Int. Cl.⁴ : **C 03 B 37/08, C 03 B 37/02**

(21) Numéro de dépôt : **80401652.5**

(22) Date de dépôt : **18.11.80**

(54) **Procédé et appareil pour la fabrication de fibres de verre.**

(30) Priorité : **20.11.79 FR 7928538**

(43) Date de publication de la demande :
**03.06.81 Bulletin 81/22**

(45) Mention de la délivrance du brevet :
**03.04.85 Bulletin 85/14**

(84) Etats contractants désignés :
**BE DE FR GB IT NL SE**

(56) Documents cités :
**BE-A- 876 072
FR-A- 1 433 657
US-A- 2 775 850
US-A- 3 468 643
US-A- 3 574 581
US-A- 4 032 314**

(73) Titulaire : **VETROTEX SAINT-GOBAIN
767 quai des Allobroges
F-73000 Chambéry (FR)**

(72) Inventeur : **Faure, Jean-Paul
Tornery Chignin
F-73800 Montmelian (FR)**
Inventeur : **Renaudin, Jean Pierre
Begon Saint-Sulpice
F-73160 Cognin (FR)**
Inventeur : **Lecron, Jacques
35 rue du Mont Jovet
F-73000 Bissy Chambery (FR)**
Inventeur : **Manera, Maxime
12 rue de Sécheron Jacob Bellecombette
F-73000 Chambery (FR)**

(74) Mandataire : **Eudes, Marcel et al
Saint-Gobain Recherche 39 Quai Lucien Lefranc
F-93304 Aubervilliers Cedex (FR)**

Jouve, 18, rue St-Denis, 75001 Paris, France

**Description**

La présente invention est relative à un procédé et à un dispositif pour la fabrication de fils continus par étirage mécanique à partir de verre fondu sortant des orifices d'une plaque perforée comprenant une forte densité d'orifices. Elle concerne en particulier la fabrication de fibres de verre continues par étirage mécanique de filets et de filaments formés en aval de la plaque perforée, ces filaments étant rassemblés sous forme de fils qui sont généralement bobinés sur un support.

La technique de ce fibrage connue la plus couramment utilisée pour fabriquer des fils continus consiste à étirer les filets en matière fondue à partir d'une filière dont la plaque de fond est munie de tétons permettant, en association avec des moyens de refroidissement adaptés, d'assurer la séparation stable des filets de matière. De plus, les tétons évitent le phénomène de « noyage » du fond de la filière lors d'une rupture de filaments au cours de l'opération de fibrage. Avec une plaque à orifices sans tétons, ce phénomène bien connu de « noyage », aussi appelé « enverrage » dans le cas particulier du verre, se manifeste par la réunion de plusieurs cônes adjacents de matière fondue et par l'étalement de la matière sur la face inférieure de la plaque en raison des effets de capillarité et de mouillage de celle-ci. Lors d'une rupture de filaments au cours de l'opération de fibrage, la présence de tétons évite donc l'enverrage massif du fond de filière.

Compte tenu des difficultés de fabrication d'un fond de filière à tétons et aussi de la place importante occupée par ceux-ci, il a bien entendu été envisagé de les supprimer et de remplacer le fond de filière à tétons par une plaque perforée généralement plane comportant un nombre égal voire supérieur d'orifices sur une surface moindre. Ceci permet en principe, non seulement d'étirer simultanément un plus grand nombre de filaments et par conséquent de fabriquer des produits nouveaux, mais aussi de remédier aux problèmes de déformation du fond de filière qui deviennent particulièrement importants dans le cas de filières de grandes dimensions.

Cependant, l'augmentation du nombre d'orifices par unité de surface de la plaque est en pratique rapidement limitée par le phénomène d'enverrage qui intervient lors d'une rupture de filaments et qui se produit d'autant plus facilement que les distances entre orifices adjacents sont plus faibles et que les conditions de fibrage, en particulier les températures au voisinage des orifices de la plaque, sont moins stables ou moins uniformes.

Pour obtenir des filières économiquement intéressantes, se caractérisant par un grand nombre d'orifices très proches les uns des autres et par une capacité de production supérieure à celle des installations classiques, il est donc nécessaire de pouvoir séparer facilement le verre en autant de filaments qu'il existe d'orifices, et de maintenir cette séparation pendant toute l'opération de fibrage.

Différents dispositifs et procédés ont été proposés pour obtenir avec des plaques à orifices une bonne stabilité de fibrage, et diminuer le nombre de ruptures de filaments ou les risques d'enverrage partiel ou total de la plaque, enverrage qui nécessite des opérations de redémarrage ou de relance du fibrage en général assez longues. Parmi les différents brevets pris dans ce domaine, le brevet français FR-A-2 257 552 est l'un des plus représentatifs. Ce brevet décrit une filière à fond plat présentant un grand nombre d'orifices par unité de surface, de l'ordre de 30 orifices par cm$^2$ et même plus. La formation des filaments et le maintien de leur séparation nécessitent un contrôle précis de la température du fond de la filière, en réglant l'énergie électrique fournie et en provoquant son refroidissement par un courant gazeux soufflé en permanence à vitesse élevée.

Ce procédé, long et compliqué à mettre en œuvre, a fait l'objet de plusieurs perfectionnements.

Un de ces perfectionnements, décrit par le brevet français FR-A-2 297 194, consiste par exemple à établir et à maintenir une différence importante de température entre le verre adjacent à la plaque et la surface externe de la plaque. La température de la plaque étant inférieure de 28 à 83 °C à la température du verre, les risques d'enverrage sont considérablement réduits. Ceci est obtenu par un soufflage permanent d'air sur le fond de la filière.

Un autre perfectionnement, décrit dans le brevet français FR-A-2 353 496, consiste à souffler en permanence l'air de refroidissement à partir de deux séries d'ajutages disposés de part et d'autre des grands côtés de la plaque perforée formant le fond de la filière. Les ajutages, qui font un angle compris entre 30 et 60° par rapport à la plaque, sont placés à une distance comprise entre 5 et 127 cm du centre de ladite plaque et délivrent des jets d'air à des vitesses d'environ 30 à 120 m/sec. Ainsi, le flux d'air atteignant les orifices est sensiblement uniforme, tout en évitant une consommation excessive d'air. Malgré les perfectionnements apportés, ce type de procédé souffre de certains inconvénients inhérents au soufflage lui-même. En particulier, il est difficile d'obtenir des températures relativement homogènes sur l'ensemble des orifices et un refroidissement régulier des cônes de verre, or ces variations de température sur le fond même de la filière provoquent une instabilité de fibrage qui affecte défavorablement le rendement de fabrication. D'autre part, en cas d'enverrage de la plaque plane après rupture de filaments, les opérations de relance du fibrage restent en général longues et compliquées, car le régime thermique est très fortement perturbé par les débits de gaz encore plus élevés que nécessite la relance. On notera aussi que ce type de procédés est d'autant plus difficile à mettre en œuvre que l'on veut fabriquer des fibres de faible diamètre.

D'autres solutions ont été proposées, notamment pour contrôler l'enverrage intervenant après la rupture d'un filament.

**0 029 779**

Ainsi, le brevet américain US-A-3 979 195 préconise de réunir chaque orifice à au moins deux orifices adjacents, par une fine cannelure creusée sur la face inférieure de la plaque perforée. De ce fait, lors de la rupture d'un filament, le verre s'écoulera préférentiellement dans la cannelure et viendra alimenter le filament étiré par l'un des orifices adjacents. Le filament, grossi par cet apport de verre, se séparera en deux sous l'action du jet d'air soufflé en permanence sur le fond de la filière.

Outre les inconvénients déjà mentionnés du soufflage permanent d'un gaz, ce système est délicat à mettre en œuvre. En effet, si le verre parcourant la cannulure est trop refroidi, il risque d'attirer le cône adjacent en venant à son contact et de provoquer la rupture du filament adjacent, ce qui conduira à un enverrage localisé non contrôlé ; si le verre est trop chaud, il risque de migrer en dehors de la cannelure et de provoquer un enverrage également incontrôlable.

On trouve un procédé et un dispositif analogues, présentés comme un perfectionnement du brevet précédent, dans le brevet américain US-A-3 982 915.

Selon ce brevet, les orifices sont perforés dans une plaque plane et rassemblés par zone comprenant chacune plusieurs dizaines d'orifices. Au sein de chaque zone, les orifices sont étroitement appariés par groupes de deux ou trois, par exemple a, b, c.

Lorsqu'un filament issu de « a » casse accidentellement le verre s'écoulant de « a » mouille le métal séparant les trois orifices, alimente préférentiellement les cônes issus de « b » et « c », et est entraîné par ces derniers. Sous l'action du jet d'air dirigé en permanence sur le fond de la filière, on obtient de nouveau la séparation en trois filaments.

On retrouve ici tous les inconvénients inhérents au soufflage permanent d'un gaz et aux variations très localisées de la viscosité du verre pouvant conduire à une rupture en chaîne ou à un enverrage non contrôlé. De surcroît, le démarrage de la filière nécessite initialement l'enverrage total de la plaque perforée et il s'ensuit que la subdivision en filaments est longue et délicate.

Une autre solution est proposée par le brevet français FR-A-2 128 312, qui décrit un procédé s'appliquant à des filières dont le fond est formé d'une plaque plane perforée de multiples orifices ou bien, dont le fond est muni d'une série de bossages parallèles disposés transversalement sur toute la largeur dudit fond. Les parois de chacun de ces bossages délimitent un canal percé longitudinalement d'une rangée d'orifices.

Dans des conditions ordinaires, le démarrage de cette filière à bossages se déroule ainsi : le verre recouvre totalement la face inférieure de chaque bossage, puis s'amasse par endroits pour former des gouttes qui, en tombant, entraînent des filets. En refroidissant le fond de la filière par un fluide gazeux, on élimine graduellement le verre en excès et on sépare les filets de verre en filets plus fins, pour arriver progressivement au stade du filament issu d'un seul orifice.

D'un démarrage à l'autre, le verre s'amasse à des endroits différents et il est impossible d'obtenir un enverrage reproductible, bien démilité, à partir duquel un filament peut être étiré d'une manière stable. Dans ces conditions, l'opération de démarrage de la filière est longue et délicate.

C'est la raison pour laquelle le procédé décrit par ce brevet consiste à prévenir dès le départ la formation de l'enverrage et à obtenir directement la séparation du verre en filaments étirés chacun d'un seul orifice. Ce résultat est atteint en émettant de façon continue un gaz inerte ou non-oxydant et un gaz hydrocarboné, décomposable à la chaleur, à proximité du fond de la filière.

Le dépôt de carbone et l'adsorption d'hydrogène, produits sur le fond de la filière à la suite de la décomposition des gaz sous l'action de la chaleur, permettent de diminuer fortement le mouillage dudit fond par le verre et s'oppose à la réunion des perles de verre qui se forme à chaque orifice.

Il ressort de l'exposé de l'art antérieur que de nombreuses techniques ont été proposées pour éviter l'enverrage dès le démarrage de la filière, ou pour l'éliminer complètement avant de commencer l'opération de fibrage proprement dite.

Contrairement à l'enseignement de l'art antérieur, notamment celui du brevet français FR-A-2 128 312, la présente invention a pour objet un procédé et un dispositif qui permettent d'obtenir un enverrage contrôlé et stable sur des zones bien délimitées et perforées d'une pluralité d'orifices, et des conditions opératoires telles que le fibrage du verre puisse être réalisé, de manière sélective, à partir desdites zones.

En fait, l'invention a pour but d'obtenir à partir d'une filière donnée deux régimes de marche différents selon lesquels on obtient soit un filament par orifice, soit un filament à partir d'un groupe d'orifices enverrés. Ainsi, l'invention permet, à partir d'une même filière, de fabriquer une large gamme de fils se différenciant notamment par le nombre de filaments élémentaires et par le diamètre desdits filaments.

La présente invention a également pour objet d'augmenter le nombre d'orifices par unité de surface et le nombre total d'orifices par filière, afin d'obtenir des fils constitués par un grand nombre de filaments élémentaires tout en maintenant une bonne stabilité du fibrage même pour la fabrication de filaments de faible diamètre.

Ces différents facteurs, à savoir l'augmentation du nombre d'orifices et l'amélioration de la stabilité du fibrage, permettent de diminuer le nombre de ruptures de filaments et d'augmenter ainsi considérablement les rendements de fabrication.

Ceci et d'autres buts sont atteints par l'emploi d'une nouvelle forme de filière travaillant dans des conditions qui sont décrites de façon plus détaillée ci-après.

En bref, la présente invention consiste essentiellement, partant du procédé selon le préambule de la

3

revendication 1, rédigé à partir du document FR-A-2 128 312, à provoquer d'abord l'enverrage partiel du fond de la filière en laissant chaque courant de verre s'écouler par simple gravité à travers une pluralité d'orifices perforés dans la base du bossage à l'aplomb de chaque alvéole et recouvrir la face inférieure externe dudit bossage ; ensuite à étirer simultanément au moins un filament par alvéole et quel que soit le degré d'enverrage de la face inférieure externe des bossages correspondants.

Suivant une des particularités de l'invention, on contrôle l'enverrage des faces inférieures externes des bossages par un refroidissement contrôlé du verre passant au travers des orifices perforés dans lesdites faces.

Selon un des aspects de l'invention, le refroidissement du verre est tel qu'il permet l'enverrage de la face inférieure externe de chaque bossage, et qu'il permet d'étirer un seul filament par alvéole à partir du verre fondu s'écoulant de l'ensemble des orifices perforés dans la base de chaque bossage.

Sous un autre aspect de l'invention, le refroidissement du verre est tel qu'il réduit au minimum l'enverrage de la face inférieure externe des bossages, et qu'il permet d'étirer un filament à partir du verre s'écoulant de chacun des orifices perforés sur la face inférieure externe desdits bossages. Ainsi on refroidit le verre jusqu'à une température $t_1$ en assurant l'enverrage de la face inférieure externe de chaque bossage ; on étire un filament par alvéole à partir du verre fondu réparti sur la face inférieure externe du bossage correspondant, puis on refroidit de nouveau le verre étiré jusqu'à une température $t_2$ inférieure à $t_1$ jusqu'à disparition de l'enverrage ; on étire un filament de chaque orifice.

Le fonctionnement de la filière est le suivant : on laisse le verre s'écouler par les orifices et recouvrir la face inférieure externe des bossages en formant une seule masse globuleuse ; on étire des filaments à raison d'un filament par alvéole ; on envoie un courant gazeux sur les bossages et on provoque la subdivision de chaque filament en autant de filaments élémentaires qu'il existe d'orifices à la base de chaque alvéole ; on rassemble les filaments élémentaires en au moins un fil enroulé sur un support en rotation et on poursuit l'étirage desdits filaments en arrêtant le courant gazeux dès le début de l'enroulement dudit fil.

Le refroidissement du verre est obtenu par rayonnement et par convection entre les parois des bossages et les gaz ambiants circulant dans les intervalles séparant lesdits bossages, et entraînés par les filaments en cours d'étirage.

Ce refroidissement du verre est effectué de manière à réduire les écarts de température entre les divers orifices de la filière, et à augmenter la viscosité du verre sortant desdits orifices.

L'invention a également comme particularité, lorsque le déséquilibre thermique de la filière est tel que le verre présente au niveau des orifices des écarts de température susceptibles de nuire à la stabilité du fibrage, de régler le refroidissement du verre par échange thermique avec un dispositif muni d'organes refroidisseurs disposés à proximité des bossages, en fonction des températures du verre fondu à la sortie des différents orifices.

Ce refroidissement ainsi effectué permet d'obtenir une meilleure uniformité des températures et un fibrage plus stable, sans faire intervenir un soufflage intense et continu d'air ou de gaz en direction de la filière.

Ce refroidissement différencié résultant notamment des échanges thermiques par rayonnement entre les parois des bossages et les organes refroidisseurs se traduit par des chutes de température entre les plans d'entrée $P_E$ du verre dans les alvéoles et les faces inférieures externes des bossages correspondants, assimilables à un plan moyen de fibrage $P_F$.

Les différentes chutes de température sont réglées, en particulier, en engageant ces organes ou une partie des organes dans les intervalles séparant les bossages et en les disposant à des hauteurs différentes par rapport au fond de la filière en fonction des températures au niveau des orifices de fibrage.

Selon l'une des particularités de l'invention, la chute de température ainsi créée entre les plans d'entrée $P_E$ de la matière fondue dans une alvéole et la face inférieure externe du bossage correspondant, assimilable à un plan moyen de fibrage $P_F$, a une valeur au moins égale à 20 °C. Pour le fibrage du verre ou de matières thermoplastiques similaires, les chutes de températures dans les différentes alvéoles seront avantageusement comprises entre 20 et 140 °C et de préférence entre 30 et 90 °C.

Suivant une autre particularité de l'invention, la température du verre dans les orifices est sensiblement égale à la température du métal au voisinage immédiat de chaque orifice. Cette température est elle-même inférieure à la température de la plaque de la filière.

Le refroidissement par rayonnement des alvéoles et des bulbes de verre, contrôlé éventuellement par le réglage de la position des organes refroidisseurs, est fonction des caractéristiques dimensionnelles des filières. Les caractéristiques ayant une influence importante sur ces échanges thermiques sont en particulier la hauteur des bossages et l'épaisseur des différentes parois comme précisé ci-après dans la définition du dispositif.

Une des particularités intéressantes de l'invention est de pouvoir fabriquer à partir d'une filière présentant un nombre total d'orifices N répartis sur n alvéoles, des fils constitués de n ou de N filaments élémentaires en agissant uniquement sur les conditions de fibrage telles que le courant gazeux balayant le fond de la filière, la chute de température provoquée dans les alvéoles et la vitesse d'étirage desdits filaments.

Ainsi, lorsqu'on veut passer d'un fil constitué de N filaments à un fil comprenant n filaments, il suffit, au moment de la relance, de maintenir l'enverrage partiel de la face inférieure externe de chaque bossage en évitant tout soufflage de gaz sur le fond de la filière et de modifier les paramètres de fibrage, notamment en diminuant la chute de température provoquée dans les alvéoles.

A l'inverse, lorsqu'on peut passer de n à N filaments, il suffit d'envoyer un courant gazeux vers le fond de la filière de manière continue ou périodique au moment de la relance et de modifier les paramètres de fibrage, notamment d'augmenter la chute de température dans les alvéoles.

Il est important de souligner qu'après ce changement, le diamètre des filaments peut être plus faible tout en diminuant la vitesse d'étirage desdits filaments.

Parmi les différents avantages apportés par la présente invention, l'un des plus remarquables est la parfaite maîtrise de l'enverrage des zones perforées, qui confère aux filières une souplesse d'utilisation exceptionnelle ; ainsi, au moment de la relance, l'opérateur ne manipule qu'un nombre relativement faible de filaments élémentaires et peut obtenir très rapidement un fil constitué de n ou de N filaments en adoptant des paramètres de fibrage traditionnels.

Par ailleurs, la grande variété de fils susceptibles d'être fabriqués à partir d'une filière déterminée, et notamment la possibilité d'étirer des filaments de diamètre assez faible (par exemple 10 $\mu$m) à des vitesses d'étirage relativement basses, permet de réaliser directement des produits semi-finis. Il est ainsi possible de fabriquer directement sous filière des enroulements de titre élevé connus sour le nom de bobines de stratifils, ou de la fibre coupée.

A noter également que la rupture d'un filament issu d'un orifice n'entraîne pas systématiquement l'arrêt de la fabrication. En effet, si le verre s'écoulant par ledit orifice est suffisamment chaud, il alimentera les bulbes des autres filaments issus de la même alvéole et l'étirage pourra se poursuivre en formant au moins un filament par alvéole. Pour une filière présentant plusieurs milliers d'orifices, la formation d'un ou de quelques filaments de plus forte section, n'aura pas de conséquence sur la qualité du fil produit. Jusqu'à un nombre limité de ce type particulier de rupture, l'opérateur n'aura pas à interrompre l'opération de fibrage, ce qui est particulièrement avantageux, notamment lors de la fabrication de produits semi-finis.

On peut noter aussi que la présente invention permet de fabriquer des fibres à une température de fibrage qui, au niveau des orifices est plus faible qu'avec les procédés classiques utilisant les filières à téton. Pour le fibrage de verres identiques, ceci a pour conséquence d'augmenter, dans un certain nombre de cas, la durée des filières.

Le verre se présentant à une température relativement basse à la sortie des orifices, il est également intéressant de souligner que la rupture d'un filament peut entraîner la rupture des autres filaments issus de la même alvéole. Toutefois, le processus d'enverrage se limite à la seule alvéole concernée, et la goutte de verre qui en résulte se forme beaucoup plus lentement que dans le cas des filières à tétons.

Cet avantage permet assez fréquemment de poursuivre l'opération de fibrage jusqu'à la fin programmée de l'enroulement et d'augmenter ainsi le nombre de bobines complètes.

Le dispositif utilisé pour la mise en œuvre du procédé de fibrage selon l'invention comporte une source d'alimentation en verre par simple gravité, reliée à une filière chauffée par effet Joule et dont la face inférieure est perforée d'une pluralité d'orifices très rapprochés, répartis par zones, un dispositif de soufflage de gaz disposé latéralement et au-dessous du fond de la filière, un dispositif ensimeur et des organes d'étirage mécanique des fibres, et il est caractérisé en ce que le fond est muni d'une mosaïque de bossages espacés régulièrement, chaque bossage étant pourvu d'au moins un alvéole interne dont la base est percée d'une pluralité d'orifices. Ce dispositif ou cette rampe de soufflage doit permettre de délivrer un courant gazeux susceptible d'atteindre toutes les zones perforées. Elle peut être fixe mais nécessite un réglage précis de l'angle d'inclinaison des ajutages par rapport au fond de la filière pour être pleinement efficace. La rampe de soufflage adoptée dans le cadre de l'invention est de préférence mobile ainsi que précisé ci-après.

Le dispositif de mise en œuvre du procédé selon l'invention peut comprendre au moins un dispositif muni d'organes refroidisseurs disposés à proximité des bossages. La forme des alvéoles, leurs dimensions et l'espacement des bossages sont tels que, compte tenu de l'échange thermique avec les gaz ambiants entraînés par les filaments en cours d'étirage et éventuellement avec ces organes refroidisseurs, des chutes de température au moins égales à 20 °C sont créées entre le plan $P_E$ du verre fondu dans une alvéole et la face inférieure externe du bossage correspondant assimilable au plan de fibrage $P_F$. Ces dimensions relatives sont calculées, pour chaque filière, en fonction de la chute de température que l'on désire obtenir dans une alvéole, sachant qu'elle est en moyenne de l'ordre de 10 à 20 °C par millimètre de hauteur de verre déterminée à partir de $P_E$.

La forme des alvéoles est de préférence géométriquement simple, par exemple une cavité cylindrique ou cubique dont la base est de préférence plane.

La face inférieure externe des bossages à la base des alvéoles est de préférence sensiblement plane et les orifices qui y sont percés sont disposés de préférence régulièrement par rapport à l'axe vertical passant par le centre de ladite base.

Lorsqu'on étire un seul filament par alvéole, cette disposition des orifices permet notamment d'obtenir un écoulement plus régulier du verre alimentant le bulbe dudit filament.

Selon un mode de réalisation du dispositif, les bossages possèdent des parois latérales verticales et présentent extérieurement une section circulaire.

D'après une des possibilités de réalisation de l'invention, les bossages sont disposés à intervalles réguliers par groupes formés chacun d'au moins une rangée perpendiculaire à l'axe longitudinal de la filière, l'écartement entre deux groupes consécutifs étant tel qu'il permet l'insertion d'un organe de refroidissement. Lorsque le groupe est constitué d'au moins deux rangées, celles-ci sont de préférence décalées transversalement l'une par rapport à l'autre.

Le dispositif refroidisseur susceptible d'être associé à la filière comprend un ensemble d'éléments allongés refroidis par conduction ou par convection. Il est constitué de préférence d'un ensemble d'ailettes minces de type classique soudées à au moins un corps creux refroidi par un fluide.

Par ailleurs, la disposition et les dimensions des bossages forment un réseau de chicanes à la base de la filière, qui réduisent les turbulences créées par le courant d'air induit par l'étirage du verre et contribuent à stabiliser les bulbes.

Cet effet est renforcé par la présence des ailettes du refroidisseur.

Le dispositif de fibrage selon l'invention et son fonctionnement sont décrits ci-après, de façon détaillée, en référence aux figures suivantes :

La figure 1 est une vue schématique d'ensemble, de face, d'un appareillage utilisé pour l'étirage mécanique de fibres continues par enroulement sur une broche tournant à grande vitesse, et comprenant une filière nécessaire pour la réalisation de l'invention,

la figure 2 est une vue partielle en coupe transversale du fond de la filière, tel que représenté sur la figure 1,

la figure 3 est une vue partielle en coupe longitudinale du fond de la filière, tel que représenté à la figure 1,

les figures 4 A, B, C et D illustrent les différentes phases du démarrage d'une filière nécessaire pour la réalisation de l'invention,

les figures 5, 6 et 7 sont des vues partielles du fond de différentes filières nécessaires pour la réalisation de l'invention,

la figure 8 est une vue en coupe longitudinale d'une partie du fond de la filière, tel que représenté sur la figure 5,

la figure 9 est une vue en coupe horizontale d'une des alvéoles représentées sur les figures 5 et 8,

la figure 10 est une vue en coupe verticale d'un autre type d'alvéole,

les figures 11 et 12 représentent des vues schématiques d'ensemble, de face, d'une installation de fabrication directe sous filière d'enroulement de stratifils,

la figure 13 représente une vue schématique d'ensemble, de face, d'une installation de fabrication directe sous filière de mat de fils continus,

la figure 14 représente une vue schématique d'ensemble, de face, d'une installation de fabrication directe sous filière, d'un tapis de fibres coupées.

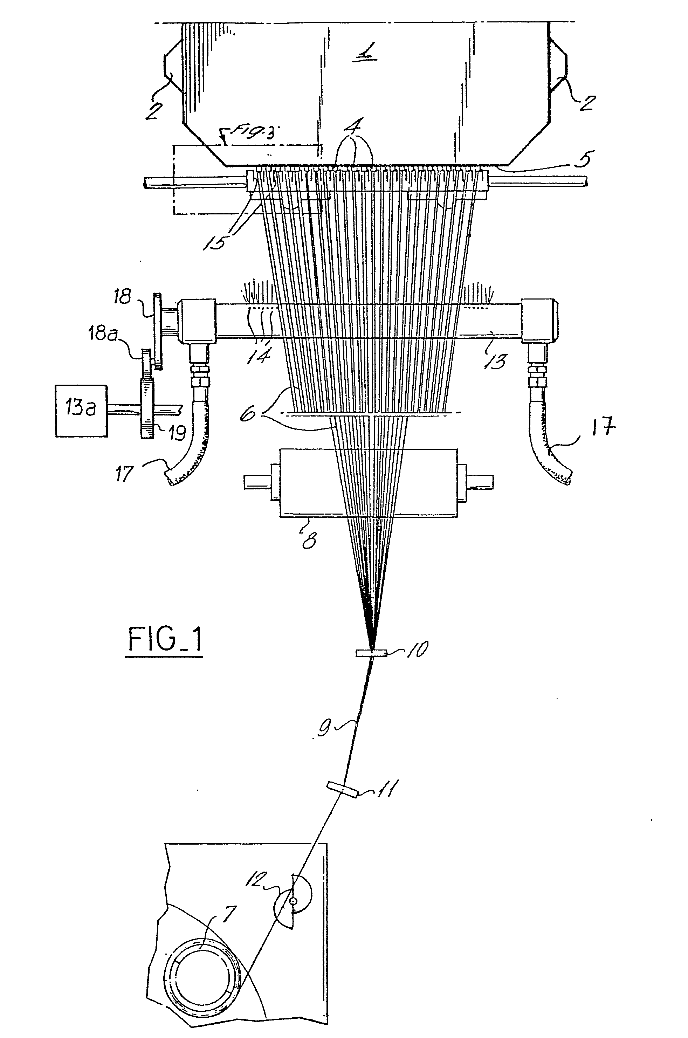

On se réfère tout d'abord à la figure 1, représentant à titre d'exemple la configuration générale d'un dispositiuf de fibrage équipé d'une filière nécessaire pour la réalisation de l'invention.

La filière 1, généralement constituée d'un alliage Pt 90 %, Rh 10 %, est munie de bornes 2 pour l'arrivée du courant électrique utilisé pour son chauffage par effet Joule. Elle contient du verre fondu qui s'écoule par les orifices, perforés sur la face inférieure externe d'une série de bossages 4 réalisés de préférence dans le même alliage que la filière et disposés en saillie à la base d'une plaque 5 constituant le fond de la filière. La filière communique avec une source d'alimentation en verre de type connu qui peut être soit l'avant corps d'un four à fusion directe à partir duquel le verre s'écoule par l'effet de la simple gravité dans la filière directement à l'état fondu, soit un système d'alimentation amenant le verre sous forme de billes, ces dernières étant alors refondues dans la filière. Quelle que soit la source d'alimentation utilisée, l'écoulement du verre fondu à travers les orifices est assuré essentiellement par la pression hydrostatique de la masse en fusion se trouvant au-dessus de la plaque. Le verre est étiré en filaments élémentaires 6, de façon classique, par l'intermédiaire d'une broche tournante 7. Après dépôt d'ensimage au moyen d'un organe ensimeur, schématisé en 8, les filaments sont rassemblés en un ou plusieurs fils 9 par les organes habituellement employés dans cette technique tels que les peignes 10 et 11 ; le fil est ensuite bobiné autour de la broche tournante 7, le long de laquelle il se déplace sous l'influence d'un organe de répartition ou hélice 12.

Une rampe de soufflage 13, perforée d'au moins une rangée d'orifices ou buses, est montée mobile autour de son axe longitudinal de manière que le flux gazeux délivré par l'ensemble des buses ou orifices balaye périodiquement et complètement le fond de la filière. Ceci est obtenu par rotation de la rampe ou par son oscillation.

Une rampe de ce type est représentée sur la figure 1 et la figure 4C ; elle est munie d'une rangée d'orifices circulaires, de 1 mm de diamètre et disposés à 2 mm d'intervalle sur une longueur au moins égale à celle de la filière. Cette rampe est implantée latéralement et au-dessous du plan de fibrage à une distance comprise de préférence entre 100 et 300 mm par rapport à l'axe longitudinal dudit plan de fibrage, de préférence à l'opposé du côté d'accès pour l'opérateur. Sa vitesse de rotation peut atteindre 2 à 3 tours par seconde. Pour une filière dont le fond présente une surface de 250 cm$^2$ environ, le débit de gaz, de préférence de l'air à température ambiante, est compris entre 0,1 et 1 m$^3$ par minute. La vitesse du gaz au niveau du fond de la filière est de quelques mètres par seconde, par exemple de 1 à 10 m/sec.

Si l'on veut obtenir un effet de refroidissement plus intense et (ou) plus régulier, il est possible de jouer sur le nombre de rangées d'orifices, leur diamètre et (ou) sur la vitesse de rotation de la rampe.

Cet effet peut être également obtenu par l'implantation de deux rampes de part et d'autre des grands côtés de la filière ; la rotation des rampes sera réglée de manière que le flux gazeux, émanant de chacune d'entre elles, balaye alternativement le fond de la filière.

Il est également possible que la rampe 13 soit simplement oscillante, de manière que la rangée d'orifices 14 parcourt un angle qui balaye l'ensemble du fond de la filière.

Dans ce cas, il est aussi possible de multiplier le nombre de rangée d'orifices et (ou) d'agir sur la vitesse d'oscillation. De même on peut implanter deux rampes oscillantes de part et d'autre du fond de la filière et régler leurs déplacements respectifs de façon que les deux courants gazeux balayent alternativement le fond de la filière.

Le gaz peut être amené soit par une seule, soit par les deux extrémités de la rampe 13, raccordée aux conduits 17.

Dans les différents modes de réalisation, la rampe présente à ses extrémités un ou deux paliers collecteurs, suivant le cas, par où s'effectue l'alimentation en air.

Les deux paliers sont supportés par une platine non représentée qui permet le positionnement et la fixation du système de soufflage sur la position de fibrage. Cette platine porte en outre un moteur pneumatique à vitesse variable en fonction du débit d'alimentation.

Le système de liaison entre la rampe et le moteur est conçu en fonction du mode de soufflage désiré.

Dans le cas d'une rampe rotative, la liaison est réalisée par deux engrenages montés l'un à l'une des extrémités de la rampe, l'autre sur l'axe du moteur.

Dans le cas de la rampe oscillante, la liaison est réalisée par un système bielle-manivelle également fixé à l'une des extrémités de la rampe. Le réglage de l'amplitude du balayage angulaire effectué par la rampe se fait en excentrant plus ou moins le pied de bielle par rapport à l'axe de rotation du moteur.

La figure 1 illustre schématiquement un autre mode de réalisation correspondant à une séquence de soufflage particulière : un bras 18 solidaire de l'une des extrémités de la rampe 13 est muni d'un galet 18a à son extrémité libre. Grâce à un ressort de rappel non représenté ou par tout autre moyen, ce galet est maintenu en contact avec la surface d'une came 19 fixée sur l'axe du moteur 13a.

On peut ainsi, en jouant sur le profil de la came, exercer un soufflage d'une durée variable sur les différentes zones avant, milieu et arrière de la filière.

Les rampes mobiles décrites précédemment délivrent un courant gazeux dont l'effet est sensiblement identique sur toute la zone perforée du fond de la filière. Ces rampes, d'un fonctionnement simple, sont facilement interchangeables et permettent une large gamme de réglages ; ainsi, la fréquence de la séquence de soufflage peut être modifiée en changeant la vitesse de rotation du moteur.

La rampe 13 peut notamment délivrer un courant gazeux à un moment déterminé de la relance de la filière comme précisé ci-après.

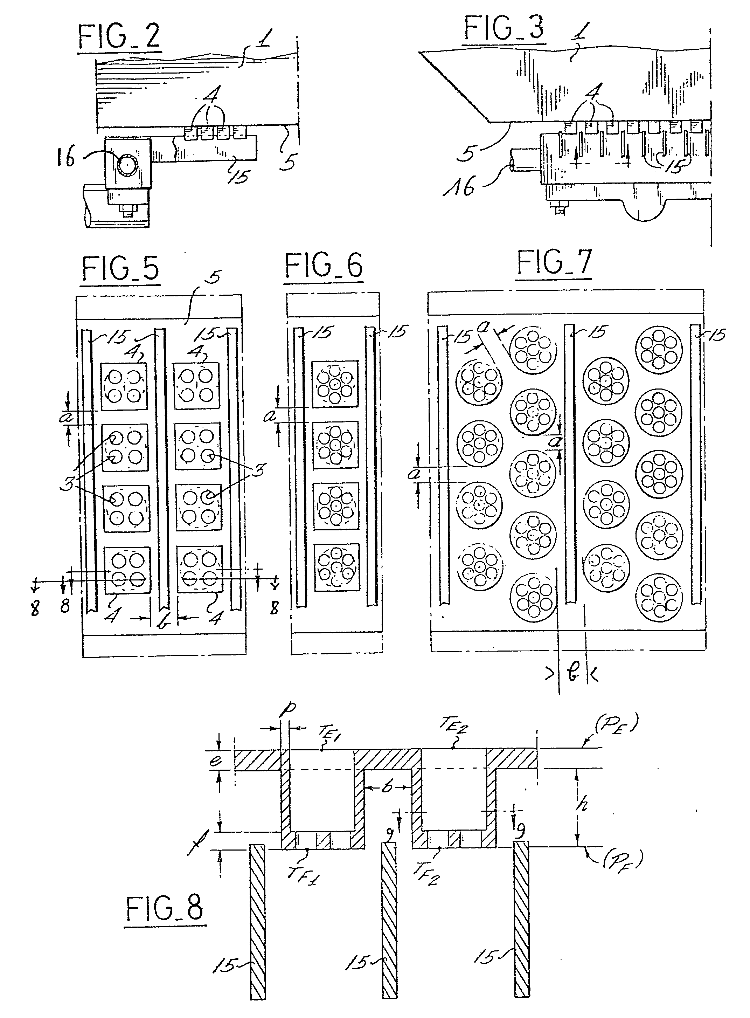

Le dispositif de refroidissement représenté partiellement sur les figures 2 et 3, est du type refroidisseur à ailettes, bien connu dans l'art antérieur. Les ailettes 15 sont reliées à au moins un tube principal 16 dans lequel circule un liquide réfrigérant, par exemple de l'eau. Ces ailettes sont de préférence en argent ou en cuivre nickelé, mais peuvent être aussi constituées par d'autres métaux ayant une bonne conductibilité thermique.

Les ailettes sont disposées en regard des intervalles séparant deux rangées consécutives, afin de pouvoir éventuellement les engager partiellement dans cet espace pour favoriser l'obtention des températures désirées au niveau des orifices de fibrage.

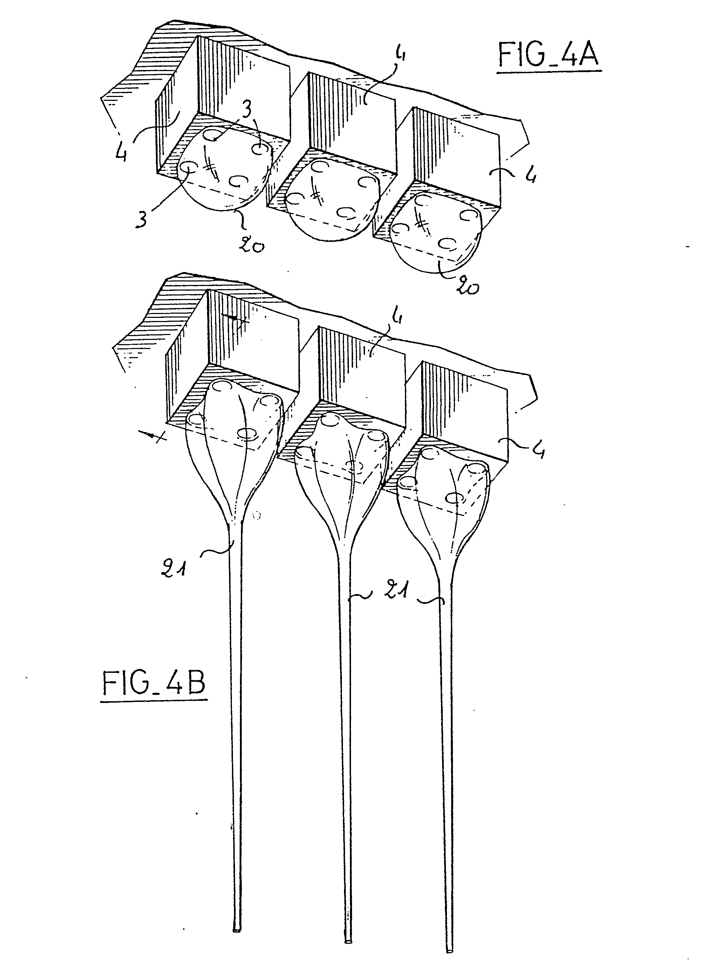

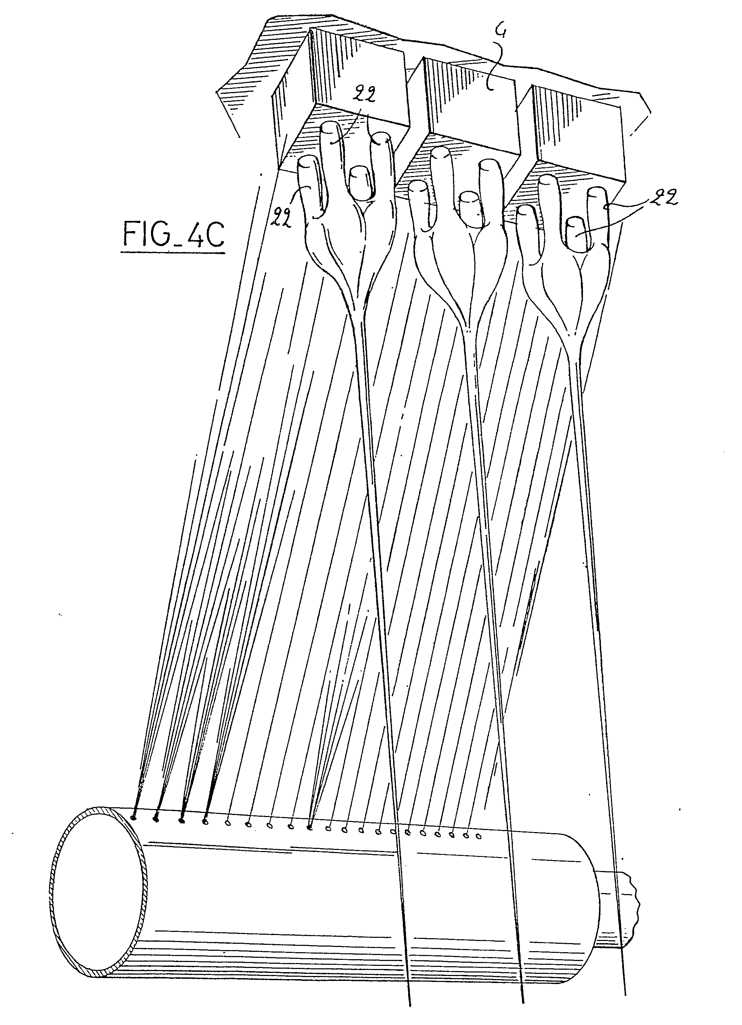

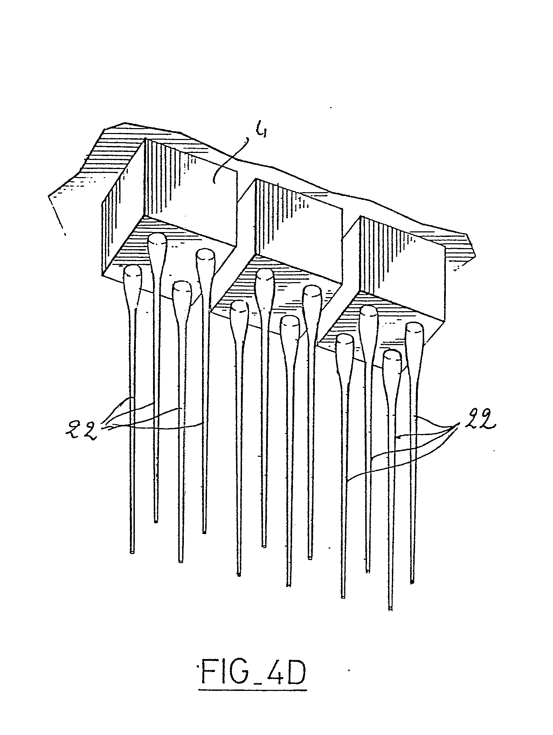

Le démarrage des filières nécessaires pour la réalisation de l'invention illustré par les figures 4A, 4B, 4C et 4D peut être réalisé de la manière suivante :

Le verre fondu alimentant la filière 1 passe dans les alvéoles, s'écoule par les différents orifices 3 perforés à la face inférieure externe des bossages 4 et enverre rapidement ladite face. L'écoulement provoque la formation d'une seule masse globuleuse 20 par bossage, qui descend progressivement sous l'action de son propre poids, en entraînant dans son sillage un seul filament de verre 21. Cette phase peut être accélérée par une intervention manuelle. On réunit l'ensemble des filaments 21 ainsi formés et l'on procède à leur étirage mécanique à faible vitesse. On envoie alors un courant gazeux, de préférence de l'air, en balayant le fond de la filière.

On provoque ainsi, de manière instantanée, la subdivision de chaque filament 21 en autant de filaments élémentaires 22 qu'il existe d'orifices à la base de chaque alvéole.

On rassemble les filaments élémentaires 22 en au moins un fil et on l'enroule sur la broche mise en rotation. On poursuit ainsi l'étirage des filaments en arrêtant le courant gazeux, dès le début de la formation de l'enroulement.

On peut utiliser le même cycle opératoire en supprimant l'action du courant gazeux, on obtient alors un filament élémentaire par alvéole.

La vitesse du courant gazeux étant amenée à une valeur suffisamment faible, il est possible de le maintenir pendant toute l'opération de fibrage.

Le balayage du fond de la filière par un fluide de refroidissement est particulièrement bien adapté aux filières nécessaires pour la réalisation de notre invention. En effet, les enverrages sont de faible étendue puisqu'ils sont limités à la face inférieure externe des bossages et, comme il sera expliqué ci-après, lesdits bossages permettent de refroidir le verre avant sa sortie. Il n'est donc nul besoin de souffler en permanence sur l'ensemble du fond de la filière, comme le préconise l'art antérieur, pour obtenir et pour maintenir la séparation des filaments.

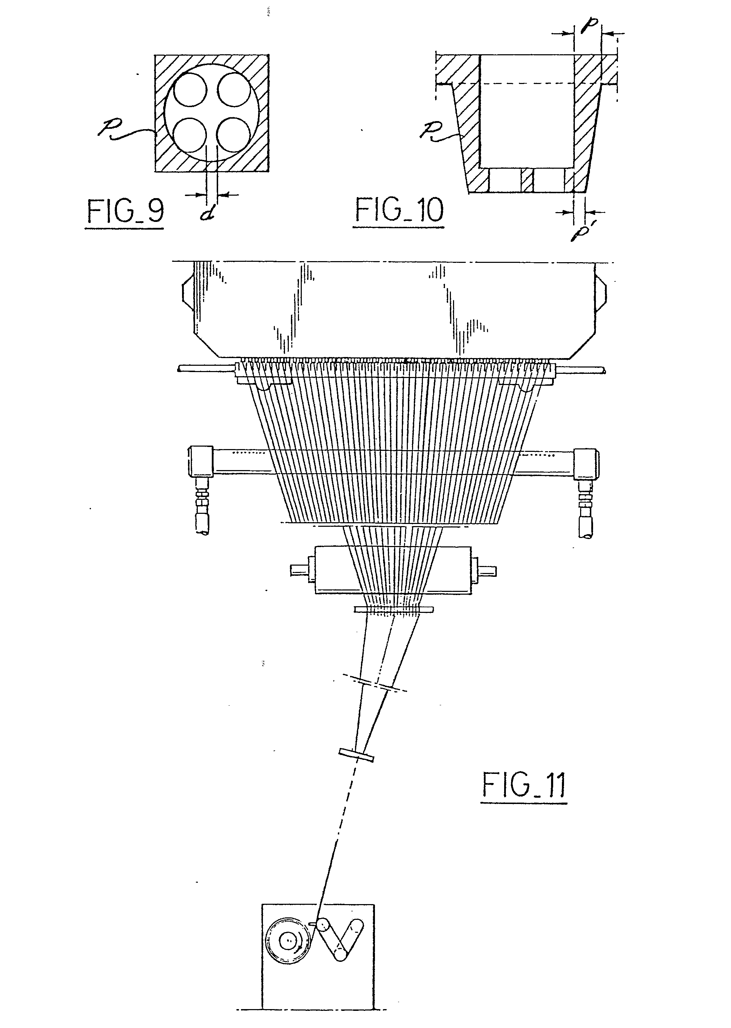

Les figures 5 et 6 montrent la face inférieure externe des bossages présentant 4 à 7 orifices, exemples de réalisation illustratifs mais non limitatifs de la présente invention. Il est évidemment possible d'augmenter le nombre d'orifices par alvéole, selon les dimensions des bossages, le diamètre des orifices, les distances d'entr'axes notamment.

Le choix du nombre d'orifices résulte du compromis recherché entre la meilleure densité d'orifices possible et une bonne séparation des bulbes pendant toute l'opération de fibrage.

Quel que soit le nombre d'orifices choisi, il a pu être constaté que les centres desdits orifices peuvent être avantageusement disposés sur des cercles centrés sur l'axe vertical passant par le milieu de la base de l'alvéole ; le centre de ladite base peut être occupé par un orifice central. La distance bord à bord des orifices peut varier de 1 mm à 0,2 mm et même moins, mais elle est de préférence comprise entre 0,2 et 0,5 mm.

Les bossages peuvent être disposés en rangées simples ou en rangées doubles, perpendiculairement à l'axe longitudinal du fond de la filière, ainsi que le montrent les figures 5 et 7.

Dans chaque rangée, les bossages sont séparés par une distance « a » qui peut être au moins égale à 0,1 mm, mais qui est de préférence comprise entre 0,4 et 1 mm. Cette distance est conservée entre deux bossages adjacents appartenant à deux rangées différentes lorsqu'on adopte la configuration représentée à la figure 7. L'écartement « b » existant entre deux rangées simples ou doubles représentées sur les figures 5 et 7 est tel qu'il permet d'insérer un élément du dispositif de refroidissement. Ainsi « b » peut varier de 2,5 à 5,5 mm et de préférence de 3,5 à 4 mm.

Les figures 5 à 7 représentent des bossages de forme cubique ou cylindrique dont la réalisation est simple. Il est bien évident que d'autres formes de bossages sont envisageables dans la mesure où ils peuvent être agencés en groupes compacts.

Un avantage particulier de l'emploi des bossages espacés les uns des autres est que le courant électrique circule essentiellement dans la plaque du fond entre les bossages, plutôt que dans les parois des bossages. Il en résulte notamment que l'épaisseur de la paroi inférieure des bossages peut être choisie indépendamment des caractéristiques électriques de la filière considérée globalement. De ce fait, la filière à alvéoles présente des caractéristiques électriques similaires à celles des fonds classiques à tétons, sans en présenter les inconvénients.

Certaines caractéristiques dimensionnelles importantes sont illustrées par la figure 8 ; il s'agit des épaisseurs e et f correspondant respectivement aux fonds de la filière et des bossages, de la hauteur h et de l'épaisseur p de la paroi latérale de ces derniers.

La détermination de ces caractéristiques est conditionnée essentiellement par les phénomènes d'énergie électrique dissipés par effet Joule, la résistance mécanique de la filière, les phénomènes d'échanges thermiques, le débit de verre par orifice et le nombre d'orifices par unité de surface.

Ainsi, dans le souci de conférer une résistance mécanique suffisante au fond de filière, tout en immobilisant le moins de métal possible, l'épaisseur e varie de 0,5 à 3 mm et de préférence de 1 à 2 mm.

Cette épaisseur déterminée indépendamment des caractéristiques dimensionnelles du bossage peut varier d'une zone à une autre du fond et est choisie de manière à obtenir une distribution des courants électriques qui soit la plus homogène possible sur l'ensemble du fond de la filière.

L'épaisseur f qui conditionne en partie le débit de verre peut varier indépendamment des autres caractéristiques dimensionnelles ; en choisissant des épaisseurs très faibles, on réduit au minimum les pertes de charges dans les orifices, ce qui permet d'obtenir des débits élevés à partir d'orifices de faible diamètre. Cette épaisseur f peut varier de 0,2 à 2 mm et de préférence de 0,4 à 1 mm, en fonction du diamètre des orifices.

Le degré de refroidissement du verre dépend étroitement de la hauteur h et de l'épaisseur p de la paroi latérale des bossages.

L'épaisseur p de la paroi P peut être constante, lorsque le bossage est de forme cylindrique par exemple. Elle peut également varier dans le plan horizontal, lorsque le bossage de forme extérieure cubique correspond à une alvéole interne cylindrique, ainsi que le représente la figure 9. L'épaisseur p peut aussi varier régulièrement dans un plan vertical suivant la figure 10. Dans ce dernier cas, l'épaisseur de la paroi P variera, du point de raccordement du bossage avec le fond de la filière à la base dudit bossage, d'une valeur p à une valeur p' inférieure à p.

D'une façon générale pour les filières selon l'invention, h varie de 1 à 10 mm et p de 0,2 à 2 mm et de préférence de 0,4 à 1 mm.

En l'absence d'ailettes, dans le plan $P_E$, représenté schématiquement sur la figure 8 et défini comme le plan d'entrée du verre dans les alvéoles, on désigne par $T_{E1}$, $T_{E2}$ les températures du verre respectivement à l'entrée des deux alvéoles 1 et 2 et par $T_{F1}$, $T_{F2}$ les températures, au niveau des orifices, dans le plan de fibrage $P_F$. Si $T_{E2}$ est supérieur à $T_{E1}$, tout autre paramètre étant maintenu constant, la chute de température $\Delta T_{N2} = T_{E2} - T_{F2}$, provoquée dans l'alvéole 2 est supérieure à la chute de température $\Delta T_{N1} = T_{E1} - T_{F1}$, dans l'alvéole 1 étant donné la prépondérance des échanges thermiques par rayonnement et par convection dans ce système sans gaz additionnel où les températures de travail sont très élevées.

Par conséquent, l'écart de température dans le plan moyen, $\Delta T_F = T_{F2} - T_{F1}$ sera inférieur à l'écart

$\Delta T_E = T_{E2} - T_{E1}$ dans le plan d'entrée des alvéoles. Cet effet d'amortissement thermique, c'est-à-dire d'atténuation au niveau du plan de fibrage des écarts de température existant à l'entrée des alvéoles est d'autant plus important que la chute de température dans chaque alvéole est plus élevée.

Si la réduction des écarts de température dans le plan $P_F$ reste néanmoins insuffisante, la configuration du fond de filière selon l'invention permet d'insérer des ailettes de refroidissement 15 et de contrôler par ce moyen les chutes de température que l'on souhaite établir dans les différentes rangées d'alvéoles.

La faible dispersion des températures obtenues dans le plan de fibrage $P_F$ est telle que la stabilité de fibrage devient au moins aussi bonne qu'en présence de tétons, ce qui permet ou facilite la fabrication de filaments de petits diamètres à des rendements intéressants. Cette faible dispersion des températures au niveau des orifices présente d'autre part l'avantage de diminuer la dispersion des diamètres de filaments pour un domaine de température de fibrage donné.

Ceci, joint à la possibilité d'obtenir des filaments de diamètre assez faible à des vitesses d'étirage relativement basses, rend les filières nécessaires pour la réalisation de l'invention particulièrement bien adaptées pour la fabrication de produits semi-finis.

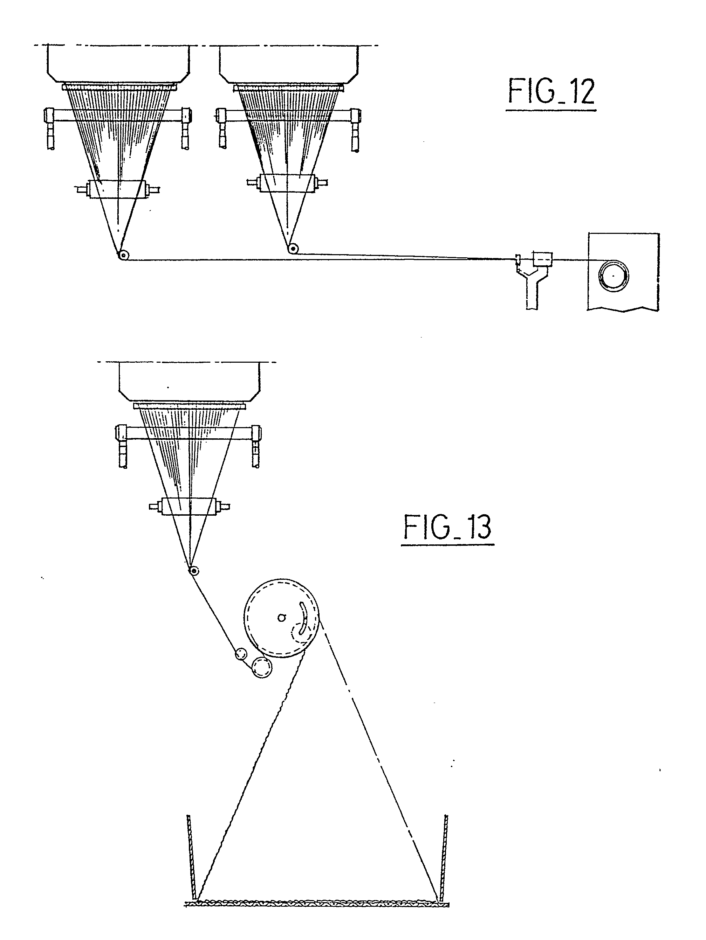

Les figures 12 à 14 illustrent à ce sujet, les principaux domaines d'application.

Le premier concerne la fabrication, directement sous filière, d'enroulement de titre élevé obtenus soit à partir d'une seule filière (figure 11) soit à partir de plusieurs filières (figure 12).

Le deuxième concerne la fabrication de mat à partir de fils continus délivrés par une pluralité de filières, selon un dispositif, tel que celui représenté à la figure 13, montrant l'une desdites filières.

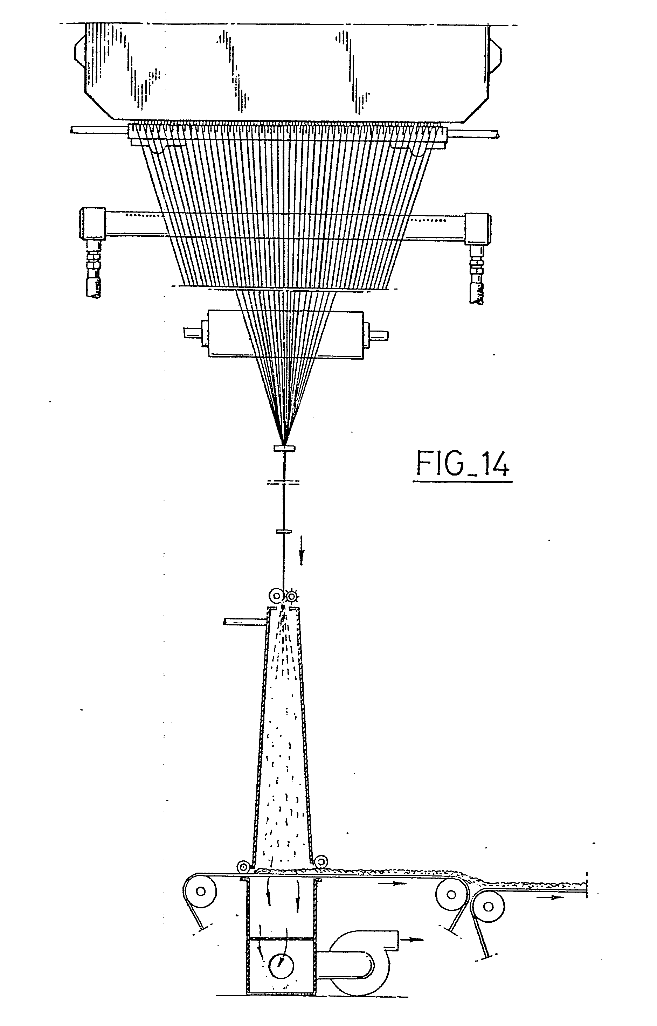

Le troisième, relatif à la fabrication directement sous filière de fibres coupées, est illustré par la figure 14. Celle-ci montre un exemple d'installation permettant d'obtenir en continu un tapis de fibres coupées.

L'intérêt et les avantages du procédé et du dispositif précédemment décrits ressortiront clairement des exemples suivants, donnés à titre non limitatif, et illustrant quelques modes de réalisation particuliers de filières nécessaires pour la réalisation de l'invention.

## Exemple 1

Le fond de filière est constitué d'une plaque métallique en platine rhodié 90-10 % et comprend 40 rangées de bossages à raison de 10 bossages par rangée, chaque bossage étant percé de 4 orifices.

La disposition des bossages et leur structure sont celles représentées sur les figures 5, 8 et 9.

Les différentes caractéristiques dimensionnelles sont les suivantes :

— fond de filière = 380 × 16 mm
— épaisseur e = 1,5 mm
— distance entre 2 bossages : a = 1 mm
                                b = 3,5 mm
— section du bossage = 4,7 × 4,7 mm
— hauteur du bossage h = 4,5 mm
— épaisseurs : f = 0,5 mm
                p (minimum) = 0,35 mm
— diamètre des orifices = 1,6 mm
— distance bord à bord d = 0,2 mm

Selon un premier régime de marche, on obtient avec cette filière un fil de 900 tex constitué de 1 600 filaments élémentaires de 17 μm de diamètre, à une vitesse d'étirage de 12 m/sec.

La température moyenne de fibrage, mesurée par pyrométrie optique, est comprise entre 1 130 et 1 140 °C. Les chutes de température provoquées dans les alvéoles oscillent entre 80 et 90 °C, les ailettes de refroidissement étant placées de sorte que leur extrémité supérieure se trouve approximativement à 2 mm au-dessous du fond des alvéoles.

La production journalière est de 890 kg.

Selon un deuxième régime de marche, on obtient avec cette filière un fil de 1 000 tex constitué de 400 filaments élémentaires de 36 μm de diamètre, à une vitesse d'étirage de 10 m/sec.

La température moyenne de fibrage est comprise entre 1 150 et 1 160 °C.

Les chutes de température dans les alvéoles oscillent entre 60 et 70 °C.

La production journalière est de 890 kg.

## Exemple 2

Le fond de la filière, constitué du même alliage que dans l'exemple 1, comprend 32 rangées de bossages à raison de 7 bossages par rangée, chaque bossage étant percé de 7 orifices.

La disposition des bossages et la répartition des orifices sont celles représentées figure 6. Au nombre d'orifices près, leur structure est identique à celle des bossages décrits dans l'exemple 1.

9

Les différentes caractéristiques dimensionnelles sont les suivantes :

— fond de filière = 380 × 58 mm
— épaisseur e = 1,5 mm
— distance entre 2 bossages : a = 1 mm
                                        b = 3,5 mm
— section du bossage = 6,4 × 6,4 mm
— hauteur du bossage h = 4,5 mm
— épaisseurs : f = 0,5 mm
                      p (minimum) = 0,5 mm
— diamètre des orifices = 1,6 mm
— distance bord à bord d = 0,3 mm

Les possibilités offertes par cette filière de 1 568 orifices pour une tirée correspondant à 900 kg/jour sont illustrées par les exemples de fabrication résumés dans le tableau n° 1 cité en annexe.

Exemple 3

Dans cet exemple, le fond de filière est également réalisé en platine rhodié 90-10 % ; il comprend 52 rangées de bossages à raison de 19 bossages par rangée, chaque bossage étant percé de 4 orifices. La disposition des bossages et leur structure sont celles représentées sur les figures 5, 8 et 9.
Les caractéristiques dimensionnelles de la filière sont les suivantes :

— fond de filière = 463 × 111 mm
— épaisseur e = 1,5 mm
— distance entre 2 bossages : a = 1 mm
                                        b = 3,5 mm
— section du bossage = 4,7 × 4,7 mm
— hauteur du bossage h = 4,5 mm
— épaisseurs : f = 0,5 mm
                      p (minimum) = 0,35 mm
— diamètre des orifices = 1,6 mm
— distance bord à bord d = 0,2 mm

Les possibilités offertes par cette filière de 3 952 orifices pour une tirée théorique de 2 000 kg/jour sont illustrées à travers les exemples de fabrication résumés dans le tableau 2 cité en annexe.

Annexe

Tableau 1

| Nombre de filaments | Titre (tex) | ∅ filament (µm) | Vitesse d'étirage (m/s) |
|---|---|---|---|
| 224 | 128 | 17 | 81 |
| 224 | 160 | 19 | 65 |
| 224 | 256 | 24 | 41 |
| 1568 | 311 | 10 | 33 |
| 1568 | 448 | 12 | 23 |
| 1568 | 900 | 17 | 12 |
| 1568 | 1792 | 24 | 6 |

**0 029 779**

Tableau 2

| Nombre de filaments | Titre (tex) | Ø filament (μm) | Vitesse d'étirage (m/s) |
|---|---|---|---|
| 988 | 400 | 14 | 57,8 |
| 988 | 600 | 17 | 38,6 |
| 988 | 1200 | 24 | 19,2 |
| 3952 | 800 | 10 | 28,9 |
| 3952 | 1200 | 12 | 19,2 |
| 3952 | 2400 | 17 | 9,6 |
| 3952 | 4800 | 24 | 4,8 |

**Revendications**

1. Procédé de fabrication par étirage mécanique, à partir de verre fondu s'écoulant par simple gravité dans une filière métallique (1), de fils continus (9) formés à partir de filaments (6, 21, 22) issus d'une pluralité d'orifices très rapprochés répartis sur le fond de la filière et selon lequel on subdivise le verre fondu en une multiplicité de courants alimentant chacun un alvéole délimité par les parois d'un bossage (4) sur le fond de la filière, caractérisé en ce que d'abord on provoque l'enverrage partiel du fond de la filière en laissant chaque courant de verre s'écouler par simple gravité à travers une pluralité d'orifices (3) perforés dans la base du bossage (4) à l'aplomb de chaque alvéole et recouvrir la face externe du bossage, et en ce qu'ensuite on étire simultanément au moins un filament par alvéole quel que soit le degré d'enverrage de la face inférieure externe des bossages (4) correspondants.

2. Procédé selon la revendication 1, caractérisé en ce qu'on contrôle l'enverrage des faces inférieures externes des bossages (4) par un refroidissement contrôlé du verre passant au travers des orifices (3) perforés dans lesdites faces.

3. Procédé selon la revendication 2, caractérisé en ce que le refroidissement du verre est tel qu'il permet l'enverrage de la face inférieure externe de chaque bossage (4) et qu'il permet d'étirer un seul filament (21) par alvéole à partir du verre s'écoulant de l'ensemble des orifices (3) perforés dans la base de chaque bossage (4).

4. Procédé selon la revendication 2, caractérisé en ce que le refroidissement du verre est tel qu'il réduit au minimum l'enverrage de la face inférieure externe des bossages (4) et qu'il permet d'étirer un filament (22) à partir du verre s'écoulant de chacun des orifices (3) perforés sur la face inférieure externe desdits bossages.

5. Procédé selon l'une des revendications précédentes, caractérisé en ce que le refroidissement du verre est obtenu par échange thermique avec les gaz ambiants circulant dans les intervalles séparant les bossages (4) et entraînés par les filaments (6, 21, 22) en cours d'étirage.

6. Procédé selon l'une des revendications précédentes, caractérisé en ce que le refroidissement du verre est contrôlé par échange thermique avec au moins un dispositif muni d'organes refroidisseurs (15) disposés à proximité des bossages (4).

7. Procédé selon l'une des revendications 2 à 6, caractérisé en ce que le refroidissement du verre se traduit par des chutes de température entre les plans d'entrée $P_E$ du verre dans les alvéoles et les faces inférieures externes des bossages correspondants, assimilable à un plan moyen de fibrage $P_F$, au moins égales à 20 °C.

8. Procédé selon l'une des revendications 6 et 7, caractérisé en ce que les chutes de température sont réglées sélectivement en ajustant les divers organes refroidisseurs (15) par rapport au fond de la filière (1).

9. Procédé selon l'une des revendications précédentes, caractérisé en ce que le refroidissement du verre est tel qu'il se traduit par des chutes de température comprises entre 20 et 140 °C et de préférence entre 30 et 90 °C.

10. Procédé selon l'une des revendications précédentes, caractérisé en ce que la température du verre dans les orifices (3) est sensiblement égale à la température du métal au voisinage de chaque orifice.

11

11. Procédé selon l'une des revendications précédentes, caractérisé en ce qu'
— on refroidit le verre jusqu'à une température $t_1$ en assurant l'enverrage de la face inférieure externe de chaque bossage (4),
— on étire un filament par alvéole à partir du verre réparti sur la face inférieure externe du bossage correspondant,
— puis on refroidit de nouveau le verre étiré à une température $t_2$, inférieure à $t_1$, jusqu'à la disparition de l'enverrage,
— on étire un filament à partir du verre s'écoulant de chacun des orifices perforés sur la face inférieure externe dudit bossage.

12. Procédé selon l'une des revendications précédentes, caractérisé en ce que l'on modifie le nombre de filaments élémentaires constituant le fil (9) en changeant les conditions de fibrage par l'action d'un courant gazeux balayant le fond de la filière (1).

13. Procédé selon la revendication 12, caractérisé en ce que le courant gazeux balaye périodiquement le fond de la filière (1).

14. Procédé selon la revendication 12, caractérisé en ce que l'on crée le courant gazeux au moment de la relance.

15. Procédé selon les revendications 12 à 14, caractérisé en ce que l'on supprime le courant gazeux, dès le début de l'enroulement de fil (9).

16. Procédé selon l'une des revendications 12 à 15, caractérisé en ce que :
— on fait passer le verre fondu dans une série d'alvéoles délimitées par les parois de bossages (4) sur le fond de la filière (1), et munis à leur face inférieure externe d'une pluralité d'orifices (3) ;
— on laisse le verre s'écouler par lesdits orifices et enverrer la face inférieure externe desdites alvéoles en formant une seule masse globuleuse par alvéole ;
— à partir desdites masses, on étire lentement des filaments, à raison d'un filament (21) par alvéole ;
— on envoie un courant gazeux sur la base de filière (1) et
— on provoque ainsi la subdivision de chaque filament (21) en autant de filaments élémentaires (22) qu'il existe d'orifices (3) à la base de chaque alvéole ;
— on rassemble lesdits filaments élémentaires en au moins un fil (9) enroulé sur un support en rotation ;
— on arrête le courant gazeux, dès le début de l'enroulement dudit fil et
— on poursuit l'étirage des filaments élémentaires (22) en l'absence de courant gazeux.

17. Procédé selon la revendication 16, caractérisé en ce qu'on diminue le diamètre des filaments élémentaires étirés, en réduisant la vitesse d'étirage desdits filaments.

18. Dispositif pour la fabrication de fibres à partir de verre fondu, comprenant une source d'alimentation en verre par simple gravité, reliée à une filière (1) chauffée par effet Joule et dont la face inférieure est perforée d'une pluralité d'orifices très rapprochés, répartis par zones, un dispositif de soufflage (13) de gaz disposé latéralement et au-dessous du fond de la filière, un dispositif ensimeur (8) et des organes d'étirage mécanique desdites fibres, caractérisé en ce que le fond de la filière (1) est muni d'une mosaïque de bossages (4) espacés régulièrement, chaque bossage étant pourvu d'au moins un alvéole interne dont la base est percée d'une pluralité d'orifices (3).

19. Dispositif selon la revendication 18, caractérisé en ce que la face inférieure externe de chaque bossage (4) est sensiblement plane et comprend au moins une alvéole interne dont la base est percée d'au moins quatre orifices (3).

20. Dispositif selon l'une des revendications 18 et 19, caractérisé en ce que les orifices (3) perforés sur la base de chaque alvéole sont disposés régulièrement par rapport à l'axe vertical passant par le centre de ladite base.

21. Dispositif selon les revendications 18 à 20, caractérisé en ce qu'en coupe dans un plan horizontal, la section extérieure des bossages (4) est différente de la section de l'alvéole interne correspondante.

22. Dispositif selon l'une des revendications 18 à 21, caractérisé en ce que la face inférieure externe de chaque bossage (4) est carrée.

23. Dispositif selon l'une des revendications 18 à 21, caractérisé en ce que la face inférieure externe de chaque bossage (4) a un contour circulaire.

24. Dispositif selon l'une des revendications 18 à 23, caractérisé en ce que la paroi latérale des bossages (4) est verticale.

25. Dispositif selon l'une des revendications 18 à 23, caractérisé en ce que l'épaisseur p de la paroi des bossages (4) décroît régulièrement de leur point de raccordement au fond de la filière (1) à leur face inférieure.

26. Dispositif selon l'une des revendications 18 à 25, caractérisé en ce que la hauteur h des bossages (4) est comprise entre 1 et 10 mm.

27. Dispositif selon l'une des revendications 18 à 25, caractérisé en ce que l'épaisseur p de la paroi des bossages (4) varie de 0,2 à 2 mm et de préférence de 0,4 à 1 mm.

28. Dispositif selon l'une des revendications 18 à 27, caractérisé en ce que la distance bord à bord séparant deux orifices (3) adjacents est inférieure à 1 mm et de préférence comprise entre 0,2 et 0,5 mm.

29. Dispositif selon l'une des revendications 18 à 28, caractérisé en ce que la chute de température

12

**0 029 779**

créée dans le verre contenu dans les alvéoles est contrôlée par au moins un dispositif muni d'ailettes de refroidissement (15) disposées en regard des intervalles séparant les bossages (4).

30. Dispositif selon l'une des revendications 18 à 29, caractérisé en ce que les bossages (4) sont disposés à des intervalles réguliers par groupes formés chacun d'au moins une rangée perpendiculaire à l'axe longitudinal de la filière (1), l'écartement entre deux groupes consécutifs étant tel qu'il permet l'insertion d'une ailette de refroidissement (15).

31. Dispositif selon l'une des revendications 18 à 30, caractérisé en ce que chaque groupe de bossages (4) comprend au moins deux rangées décalées transversalement l'une par rapport à l'autre et perpendiculaires à l'axe longitudinal de la filière (1).

32. Dispositif selon la revendication 18, caractérisé en ce que les dimensions des bossages (4) sont telles que, par échange thermique avec l'extérieur, la chute de température subie par le verre entre le plan d'entrée $P_E$ de chaque alvéole et le plan de fibrage $P_F$ est d'au moins 20 °C.

33. Dispositif selon l'une des revendications 18 à 32, comprenant une filière (1) munie de n alvéoles, chaque alvéole étant perforé de x orifices (3), caractérisé en ce que le fil de verre (9) fabriqué à partir de ladite filière est constitué de n ou de nx filaments élémentaires (21, 22).

34. Dispositif pour la fabrication de fibres continues à partir de verre fondu, ainsi que défini par l'une des revendications 18 à 33 et comprenant un dispositif de soufflage de gaz implanté parallèlement à l'axe longitudinal de la face inférieure de la filière, caractérisé en ce que ce dispositif est constitué d'au moins une rampe de soufflage (13) perforée d'au moins une rangée d'orifices (14) sur une longueur au moins égale à celle de la filière (1), d'au moins un moteur (13a) relié à l'une des extrémités de ladite rampe (13) et déplaçant cette dernière autour de son axe longitudinal.

35. Dispositif selon la revendication 34, caractérisé en ce que la rampe (13) est animée d'un mouvement de rotation continue.

36. Dispositif selon la revendication 35, caractérisé en ce que la rampe (13) est animée d'un mouvement d'oscillation tel que la (ou les) rangée(s) d'orifices (14) balaye(nt) l'ensemble du fond de la filière.

**Claims**

1. A method of producing by mechanical drawing from molten glass flowing purely by gravity into a metallic spinneret (1), continuous threads (9) formed from filaments (6, 21, 22) issuing from a plurality of very closely located orifices distributed over the bottom of the spinneret and according to which the molten glass is sub-divided into a multiplicity of flows each supplying a chamber bounded by the walls of a projection (4) on the bottom of the spinneret, characterised in that first of all partial glass-coating of the bottom of the spinneret is carried out by allowing each flow of glass to travel purely by gravity through a plurality of orifices (3) provided in the base of the projection (4) in line with each chamber to cover the outer face of the projection, and in that then at least one filament per chamber is drawn simultaneously whatever the degree of glass coating may be on the lower outer face of the corresponding projections (4).

2. Method according to Claim 1, characterised in that the glass coating of the outer lower faces of the projections (4) is controlled by a controlled cooling of the glass passing through the orifices (3) provided in the said faces.

3. Method according to Claim 2, characterised in that cooling of the glass is sich as to permit the outer undersurface of each projection (4) to be coated with glass and in that it makes it possible to draw a single filament (21) per chamber from glass flowing through the assembly of the orifice (3) provided in the base of each projection (4).

4. Method according to Claim 2, characterised in that cooling of the glass is such that it minimises the glasscoating of the outer underside of the projections (4) and is such that it makes it possible to draw a filament (22) from glass flowing from each of the orifices (23) perforated over the outer underside of the said projections.

5. Method according to one of the preceding Claims, characterised in that the glass is cooled by heat exchange with ambient gases circulating in the spaces separating the projections (4) and entrained by the filaments (6, 21, 22) which are in course of being drawn.

6. Method according to one of the preceding Claims, characterised in that cooling of the glass is controlled by heat exchange with at least one device provided with cooling members (15) disposed in proximity of the projections (4).

7. Method according to one of Claims 2 to 6, characterised in that cooling of the glass is translated by drops in temperature between the planes of intake $P_E$ of the glass into the chambers while the outer undersides of the corresponding projections, which can be likened to a mean fibring plane $P_F$, at least equal to 20 °C.

8. Method according to one of Claims 6 and 7, characterised in that the falls in temperature are regulated selectively by adjusting the various cooling means (15) in relation to the bottom of the spinneret (1).

9. Method according to one of the preceding Claims, characterised in that cooling of the glass is such that it is translated by drops in temperature comprised between 20 and 140 °C and preferably between 30 and 90 °C.

13

10. Method according to one of the preceding Claims, characterised in that the temperature of the glass in the orifices (3) is substantially equal to the temperature of the metal in the vicinity of each orifice.

11. Method according to one of the preceding Claims, characterised in that
— the glass is cooled to a temperature $t_1$ by ensuring coating of the outer underside of each projection (4) with glass,
— a filament per chamber is drawn from glass distributed over the outer underside of the corresponding projection,
— then the drawn glass is cooled again to a temperature $t_2$ less than $t_1$ until the glass coating disappears,
— a filament is drawn from the glass flowing from each of the orifices provided on the outer underside of the said projection.

12. Method according to one of the preceding Claims, characterised in that the number of elementary filaments constituting the thread (9) is modified by changing the fibring conditions by the action of the flow of gas passing over the bottom of the spinneret (1).

13. Method according to Claim 1, characterised in that the flow of gas periodically sweeps over the bottom of the spineeret (1).

14. Method according to Claim 12, characterised in that the flow of gas is created at the moment of re-start.

15. Method according to Claims 12 to 14, characterised in that the flow of gas is dispensed with as soon as winding of thread (9) is commenced.

16. Method according to one of Claims 12 to 15, characterised in that :
— the molten glass is passed through a series of chambers defined by the walls of projections (4) on the bottom of the spinneret (1) and provided on their outer underside with a plurality of orifices (3) ;
— the glass is allowed to flow through the said orifices and to coat the outer underside of the said chambers forming a singular globular mass per chamber ;
— from the said masses, filaments are drawn slowly at the rate of one filament (21) per chamber ;
— a flow of gas is passed over the base of the spinneret (1) and ·
— thus, each filament (21) is sub-divided into as many elementary filaments (22) as there are orifices (3) in the base of each chamber ;
— the said elementary filaments are collected into at least one thread (9) which is wound onto a rotating support ;
— the flow of gas is stopped as soon as winding of the said thread commences, and
— drawing of the elementary filaments (22) is continued in the absence of gas flow.

17. Method according to Claim 16, characterised in that the diameter of the elementary threads drawn is diminished by reducing the rate of drawing of the said filaments.

18. Apparatus for producing fibres from molten glass comprising a source of supply of glass by simple gravity connected to a spinneret (1) heated by Joule's effect and of which the underside is perforated by a plurality of orifices which are very close together and which are distributed by zones, a gas blowing device (13) disposed laterally of and below the bottom of the spinneret, a greasing device (8) and means of mechanical drawing of the said fibres, characterised in that the bottom of the spinneret (1) is provided with a mosaic of regularly spaced projections (4), each projection being provided with at least one inner chamber, the base of which is provided with a plurality of orifices (3).

19. Apparatus according to Claim 18, characterised in that the outer underside of each projection (4) is substantially flat and comprises at least one inner chamber, the base of which has at least four orifices (3) pierced in it.

20. Apparatus according to one of Claims 18 and 19, characterised in that the orifices (3) perforated over the base of each chamber are regularly disposed in relation to the vertical axis passing through the centre of the said base.

21. Apparatus according to Claims 18 to 20, characterised in that in cross-section in a horizontal plane, the outer cross-section of the projections (4) is different from the corresponding inner cross-section of the chamber.

22. Apparatus according to one of Claims 18 to 21, characterised in that the outer underside of each projection (4) is square.

23. Apparatus according to one of Claims 18 to 21, characterised in that the outer underside of each projection (4) has a circular contour.

24. Apparatus according to one of Claims 18 to 23, characterised in that the side wall of the projections (4) is vertical.

25. Apparatus according to one of Claims 18 to 23, characterised in that the thickness p of the wall of the projections (4) decreases regularly from their point of connection with the bottom of the spinneret (1) to their underside.

26. Apparatus according to one of Claims 18 to 25, characterised in that the height h of the projections (4) is comprised between 1 and 10 mm.

27. Apparatus according to one of Claims 18 to 25, characterised in that the thickness p of the wall of the projections (4) varies from 0.2 to 2 mm and preferably from 0.4 to 1 mm.

28. Apparatus according to one of Claims 18 to 27, characterised in that the edge-to-edge distance

# 0 029 779

separating two adjacent orifices (3) is less than 1 mm and is preferably comprised between 0.2 and 0.5 mm.

29. Apparatus according to one of Claims 18 to 28, characterised in that the drop in temperature created in the glass contained in the chambers is controlled by at least a device provided with cooling fins (15) disposed opposite the gaps separating the projections (4).

30. Apparatus according to one of Claims 18 to 29, characterised in that the projections (4) are disposed at regular intervals in groups each of which is formed by at least one row perpendicular to the longitudinal axis of the spinneret (1), the gap between two consecutive groups being such that it permits of insertion of a cooling fin (15).

31. Apparatus according to one of Claims 18 to 30, characterised in that each group of projections (4) comprises at least two rows which are offset transversely one in relation to the other and at right-angles to the longitudinal axis of the spinneret (1).

32. Apparatus according to Claim 18, characterised in that the dimensions of the projections (4) are such that, by heat exchange with the outside, the drop in temperature suffered by the glass between the inlet plane $P_E$ of each chamber and the fibring plane $P_F$ is at least 20 °C.

33. Apparatus according to one of Claims 18 to 32, comprising a spinneret (1) provided with n chambers, each chamber being perforated with x orifices (3), characterised in that the glass thread (9) produced on leaving each spinneret is constituted by n or nx elementary filaments (21, 22).

34. Apparatus for the manufacture of continuous fibres from molten glass as defined by one of Claims 18 to 33 and comprising a gas blowing device implanted parallel with the longitudinal axis of the underside of the spinneret, characterised in that the apparatus consists of at least one blowing ramp (13) in which there is at least one row of orifices (14) over a length at least equal to that of the spinneret (1), at least one motore (13a) connected to one of the ends of the said ramp (13) and displacing this latter about its longitudinal axis.

35. Apparatus according to Claim 34, characterised in that the ramp (13) is driven to perform a continuous rotary movement.

36. Apparatus according to Claim 35, characterised in that the ramp (13) is driven to perform an oscillatory movement such that the row or rows of orifices (14) sweep the entire bottom of the spinneret.

**Ansprüche**

1. Verfahren zur Herstellung von kontinuierlichen Fäden (9) durch mechanisches Ziehen von geschmolzenem, schwerkraftsbedingt in einer metallischen Ziehdüseneinheit (1) strömendem Glas, bei welchem die kontinuierlichen Fäden (9) von aus einer Anzahl von engständigen Öffnungen am Boden der Ziehdüseneinheit austretenden Fäden gebildet werden, wobei das geschmolzene Glas in eine Vielzahl von Strömen unterteilt wird, welche jeweils einer durch die Wände eines Vorsprungs (4) auf dem Boden der Ziehdüseneinheit begrenzten Zelle zugeführt werden, dadurch gekennzeichnet, daß zuerst ein teilweises Verglasen des Bodens der Ziehdüseneinheit bewirkt wird, indem man jeden Glasstrom schwerkraftsbedingt durch eine Anzahl Öffnungen (3) in der Basis des Vorsprungs in der Senkrechten jeder Zelle strömen und die Außenseite des Vorsprungs bedecken läßt, und daß schließlich gleichzeitig mindestens ein Filament pro Zelle gezogen wird, wie auch immer der Grad der Verglasung der äußeren Unterseite der entsprechenden Vorsprünge (4) ist.

2. Verfahren nach Anspruch 1, dadurch gekennzeichnet, daß die Verglasung der äußeren Unterseiten der Vorsprünge (4) durch eine gesteuerte Kühlung des durch die Öffnungen (3) in diesen Flächen strömenden Glases gesteuert wird.

3. Verfahren nach Anspruch 2, dadurch gekennzeichnet, daß die Abkühlung des Glases derart ist, daß die Verglasung der äußeren Unterseite eines jeden Vorsprungs (4) bewirkt wird und das Ziehen eines einzigen Filaments (21) pro Zelle aus dem aus der Gruppe von Öffnungen (3) in der Basis eines jeden Vorsprungs (4) strömenden Glases ermöglicht ist.

4. Verfahren nach Anspruch 2, dadurch gekennzeichnet, daß die Kühlung des Glases derart ist, daß die Verglasung der äußeren Unterseite der Vorsprünge (4) auf ein Minimum reduziert wird und das Ziehen eines Filaments (22) von dem aus jederder Öffnungen (3) auf der äußeren Unterseite dieser Vorsprünge strömenden Glases ermöglicht wird.

5. Verfahren nach einem der vorhergehenden Ansprüche, dadurch gekennzeichnet, daß die Kühlung des Glases durch Wärmeaustausch mit Gasen der Umgebung bewirkt wird, welche in den die Vorsprünge (4) trennenden Zwischenräumen zirkulieren und durch die Filamente (6, 21, 22) während des Ziehvorgangs mitgerissen werden.

6. Verfahren nach einem der vorhergehenden Ansprüche, dadurch gekennzeichnet, daß die Kühlung des Glases durch Wärmeaustausch mit mindestens einer Vorrichtung gesteuert wird, welche mit in der Nähe der Vorsprünge (4) angeordneten Kühlorganen versehen ist.

7. Verfahren nach einem der Ansprüche 2 bis 6, dadurch gekennzeichnet, daß die Kühlung des Glases Temperaturgefälle zwischen den Eintrittsebenen ($P_E$) des Glases in die Zellen und den einer mittleren Faserbildungsebene ($P_F$) gleichgestellten äußeren Unterseiten der entsprechenden Vorsprünge von mindestens gleich 20 °C bewirkt.

15

8. Verfahren nach einem der Ansprüche 6 und 7, dadurch gekennzeichnet, daß die Temperaturgefälle durch Justieren der verschiedenen Kühlorgane (15) bezüglich des Bodens der Ziehdüseneinheit (1) selektiv geregelt werden.

9. Verfahren nach einem der vorhergehenden Ansprüche, dadurch gekennzeichnet, daß das Glas derart gekühlt wird, daß Temperaturgefälle zwischen 20 und 140 °C und vorzugsweise zwischen 30 und 90 °C bewirkt werden.

10. Verfahren nach einem der vorhergehenden Ansprüche, dadurch gekennzeichnet, daß die Temperatur des Glases in den Öffnungen (3) im wesentlichen gleich der Temperatur des Metalls benachbart einer jeden Öffnung ist.

11. Verfahren nach einem der vorhergehenden Ansprüche, dadurch gekennzeichnet,
— daß das Glas bis auf eine Temperatur $t_1$ abgekühlt wird, welche die Verglasung der äußeren Unterseite eines jeden Vorsprungs (4) sicherstellt,
— daß ein Filament pro Zelle aus dem auf der äußeren Unterseite des entsprechenden Vorsprungs verteilten Glases gezogen wird,
— daß darauf das gezogene Glas erneut auf eine Temperatur $t_2$, geringer als die Temperatur $t_1$, abgekühlt wird, bis die Verglasung verschwindet,
— und daß ein Fllament aus dem Glas gezogen wird, welches aus jeder der Öffnungen auf der äußeren Unterseite des Vorsprungs strömt.

12. Verfahren nach einem der vorhergehenden Ansprüche, dadurch gekennzeichnet, daß die Zahl der Grundfilamente, welche den Faden (9) bilden, dadurch modifiziert wird, daß die Bedingungen für die Faserbildung durch einen Gasstrom geändert werden, welcher den Boden der Ziehdüseneinheit (1) bespült.

13. Verfahren nach Anspruch 12, dadurch gekennzeichnet, daß der Gasstrom periodisch den Boden der Ziehdüseneinheit (1) bespült.

14. Verfahren nach Anspruch 12, dadurch gekennzeichnet, daß der Gasstrom im Augenblick des Anfahrens erzeugt wird.

15. Verfahren nach einem der Ansprüche 12 bis 14, dadurch gekennzeichnet, daß der Gasstrom mit Beginn des Wickelns des Fadens (9) unterdrückt wird.

16. Verfahren nach einem der Ansprüche 12 bis 15, dadurch gekennzeichnet,
— daß man das geschmolzene Glas in eine Reihe von Zellen strömen läßt, welche durch Wände von Vorsprüngen (4) auf dem Boden der Ziehdüseneinheit (1) begrenzt und an ihrer äußeren Unterseite mit einer Anzahl von Öffnungen (3) versehen sind,
— daß man das Glas durch diese Öffnungen strömen läßt und die äußere Unterseite dieser Zellen verglast, indem eine einzelne kugelförmige Masse pro Zelle gebildet wird,
— daß aus diesen Massen langsam Filamente gezogen werden und zwar ein Filament (21) pro Zelle,
— daß auf die Basis der Ziehdüseneinheit (1) ein Gasstrom gerichtet wird, und
— daß die Trennung eines jeden Filaments (21) in soviele Filamente (22) bewirkt wird, wie Öffnungen (3) an der Basis einer jeden Zelle vorhanden sind,
— daß die Grundfilamente zu mindestens einem Faden (9) vereinigt werden, welcher auf einer Drehhaspel aufgewickelt wird,
— daß der Gasstrom mit Beginn der Wicklung des Fadens unterbrochen und
— daß Ziehen der Grundfilamente (22) in Abwesenheit des Gasstroms fortgeführt wird.

17. Verfahren nach Anspruch 16, dadurch gekennzeichnet, daß der Durchmesser der gezogenen Grundfilamente durch Verringerung der Ziehgeschwindigkeit der Filamente verringert wird.

18. Vorrichtung zur Herstellung von Fasern aus geschmolzenem Glas, mit einer Quelle zur Zuführung von Glas durch Schwerkraft, welche mit einer durch Joule-Effekt erwärmten Ziehdüseneinheit (1) verbunden ist und deren Unterseite mit einer Anzahl von engständigen, in Zonen gegliederten Öffnungen versehen ist, mit einer seitlich und unterhalb des Bodens der Ziehdüseneinheit angeordneten Blaseinrichtung (13), einer Schmälzeinrichtung und mechanischen Faserziehorganen, dadurch gekennzeichnet, daß der Boden der Ziehdüseneinheit (1) mit einem Mosaik von in regelmäßigen Abständen angeordneten Vorsprüngen (4) versehen ist, wobei jeder Vorsprung mindestens eine innere Zelle aufweist, deren Basis mit einer Anzahl von Öffnungen (3) versehen ist.

19. Vorrichtung nach Anspruch 18, dadurch gekennzeichnet, daß die äußere Unterseite eines jeden Vorsprungs (4) im wesentlichen eben ist und mindestens eine innere Zelle aufweist, deren Basis mit mindestens vier Öffnungen (3) versehen ist.

20. Vorrichtungen nach einem der Ansprüche 18 und 19, dadurch gekennzeichnet, daß die in der Basis einer jeden Zelle vorgesehenen Öffnungen (3) bezüglich der vertikalen Achse durch das Zentrum der Basis regelmäßig angeordnet sind.

21. Vorrichtung nach den Ansprüche 18 bis 20, dadurch gekennzeichnet, daß bei einem Schnitt in einer horizontalen Ebene der Außenquerschnitt der Vorsprünge (4) unterschiedlich zum Querschnitt der entsprechenden inneren Zelle ist.

22. Vorrichtung nach einem der Ansprüche 18 bis 21, dadurch gekennzeichnet, daß die äußere Unterseite eines jeden Vorsprungs (4) quadratisch ist.

23. Vorrichtung nach einem der Ansprüche 18 bis 21, dadurch gekennzeichnet, daß die äußere Unterseite eines jeden Vorsprungs (4) kreisförmig gebildet ist.

24. Vorrichtung nach einem der Ansprüche 18 bis 23, dadurch gekennzeichnet, daß die Seitenwand der Vorsprünge (4) vertikal verläuft.

25. Vorrichtung nach einem der Ansprüche 18 bis 23, dadurch gekennzeichnet, daß die Dicke (p) der Wand der Vorsprünge (4) regelmäßig vom Anschlußpunkt am Boden der Ziehdüseneinheit (1) bis zu Unterseite abnimmt.

26. Vorrichtung nach einem der Ansprüche 18 bis 25, dadurch gekennzeichnet, daß die Höhe h der Vorsprünge (4) zwischen 1 und 10 mm beträgt.

27. Vorrichtung nach einem der Ansprüche 18 bis 25, dadurch gekennzeichnet, daß die Dicke p der Wand der Vorsprünge (4) sich von 0,2 bis 2 mm und zwar vorzugsweise von 0,4 bis 1 mm verändert.

28. Vorrichtung nach einem der Ansprüche 18 bis 27, dadurch gekennzeichnet, daß der Rand-zu-Rand-Abstand zwischen zwei benachbarten Öffnungen (3) geringer als 1 mm ist und vorzugsweise zwischen 0,2 und 0,5 mm liegt.

29. Vorrichtung nach einem der Ansprüche 18 bis 28, dadurch gekennzeichnet, daß das in dem in den Zellen enthaltenen Glas erzeugte Temperaturgefälle durch mindestens eine Vorrichtung gesteuert wird, welche mit Kühlrippen (15) versehen ist, die bezüglich der Zwischenräume zwischen den Vorsprüngen (4) angeordnet sind.

30. Vorrichtung nach einem der Ansprüche 18 bis 29, dadurch gekennzeichnet, daß die Vorsprünge (4) mit regelmäßigen Abständen in Gruppen angeordnet sind, die jede von mindestens einer zur Längsachse der Ziehdüseneinheit (1) senkrechten Reihe gebildet sind, wobei der Abstand zwischen zwei aufeinanderfolgenden Gruppen so groß ist, daß eine Kühlrippe (15) dazwischen einsetzbar ist.

31. Vorrichtung nach einem der Ansprüche 18 bis 30, dadurch gekennzeichnet, daß jede Gruppe von Vorsprüngen (4) mindestens zwei Reihen besitzt, die in Querrichtung zueinander versetzt und senkrecht zur Längsachse der Ziehdüseneinheit (1) angeordnet sind.

32. Vorrichtung nach Anspruch 18, dadurch gekennzeichnet, daß die Vorsprünge (4) derart bemessen sind, daß das Temperaturgefälle des Glases zwischen der Eintrittsebene $P_E$ einer jeden Zelle und der Faserbildungsebene $P_F$ infolge Wärmeaustausch mit der Außenumgebung mindestens 20 °C beträgt.

33. Vorrichtung nach einem der Ansprüche 18 bis 32, mit einer Ziehdüseneinheit (1), die mit einer Anzahl n von Zellen mit jeweils x Öffnungen (3) versehen ist, dadurch gekennzeichnet, daß der von der Ziehdüseneinheit hergestellte Glasfaden (9) aus n oder nx Grundfilamenten (21, 22) gebildet ist.

34. Vorrichtung zur Herstellung von kontinuierlichen Fasern aus geschmolzenem Glas gemäß einem der Ansprüche 18 bis 33, mit einer parallel zur Längsachse der Unterseite der Ziehdüseneinheit angeordneten Blaseinrichtung, dadurch gekennzeichnet, daß die Einrichtung gebildet ist von mindestens einer Blasrampe (13) mit mindestens einer Reihe von Öffnungen (14) auf einer Länge mindestens gleich der Länge der Ziehdüseneinheit (1) und durch mindestens einen Motor (13a), welcher mit einem der Enden der Rampe (13) verbunden ist und diese um ihre Längsachse bewegt.

35. Vorrichtung nach Anspruch 34, dadurch gekennzeichnet, daß die Rampe (13) mit einer kontinuierlichen Drehbewegung angetrieben ist.

36. Vorrichtung nach Anspruch 35, dadurch gekennzeichnet, daß die Rampe (13) oszillierend angetrieben ist, derart, daß die Reihe(n) von Öffnungen (14) den gesamten Boden der Ziehdüseneinheit bespülen.

FIG_1

FIG_2

FIG_3

FIG_5

FIG_6

FIG_7

FIG_8

FIG_4A

FIG_4B

FIG_4C

FIG_4D

FIG_9

FIG_10

FIG_11

FIG_12

FIG_13

FIG_14